# EUROPEAN PATENT SPECIFICATION

(11) **EP 1 703 453 B1**
(45) Date of publication and mention of the grant of the patent: **11.11.2015**
(21) Application number: 06100841.3
(22) Date of filing: 25.01.2006
(51) Int. Cl.: G06Q 10/00, H04L 12/58, H04L 29/08

(54) **Instant Messaging with transmission of presence documents according to the peer to peer paradigm**
Instant-Messaging mit Übermittlung von Präsenzdokumenten nach dem "Peer to peer" Prinzip
Messagerie instantanée avec transmission de documents de présence selon le paradigme "peer to peer"

(30) Priority: 28.02.2005 US 68731
(43) Date of publication of application: 20.09.2006
(73) Proprietor: Microsoft Technology Licensing, LLC, Redmond, WA 98052 (US)
(72) Inventor: Zlateff, Carmen, Redmond, WA98052 (US); Miller, David Michael, Redmond, WA98052 (US); Holmes, John S., Redmond, WA 98052 (US)
(74) Representative: Grünecker Patent- und Rechtsanwälte PartG mbB

(56) References cited:
- EP-A- 0 665 670
- WO-A-2005/017660

## Description

### TECHNICAL FIELD

This disclosure relates in general to instant messaging and in particular, by way of example but not limitation, to facilitating flexible and expanded presence document capabilities.

### BACKGROUND

The popularity of instant messaging has grown significantly in the last few years. Instant messaging was originally used in order to send someone a short message with relatively little effort and in essentially real-time. The ability to transmit emoticons, as well as text, was also introduced. Instant messaging was originally popular primarily for personal and casual use between and among friends. Recently, however, its use has spread into the business world to facilitate casual and/or real-time communications.

The overall growth of instant messaging is also partly due to its features that extend beyond mere messaging. Instant messaging now usually encompasses the dissemination of status notifications to buddies. For example, when an individual logs on, an online status notification is disseminated to interested buddies. When an individual logs off, an offline status notification is disseminated to interested buddies.

Individuals participating in an instant messaging system are also usually given the opportunity to select an image to graphically represent them. These graphical images, status notifications, emoticons, etc. arguably increase the functionality, depth, and richness of instant messaging. It is therefore apparent that the acceptance and usage of instant messaging programs would likely grow as new features are added. Unfortunately, it has traditionally been a difficult and time-consuming endeavor to add new features to instant messaging systems.

Accordingly, there is a need for schemes, mechanisms, techniques, etc. that can facilitate the introduction of new instant messaging features.

WO 2005/017660 A deals with peer to peer content sharing wherein a peer includes a chat module, an application module, a content repository and a content daemon. A content daemon tracks user activity by e.g. polling application modules for current active content and identity-based activity and storing the information in a list kept by a content information database which is part of the content daemon. The list is populated with unique identifiers. For active content an exemplary unique identifier is an ID3 tag for MP3s. For identity-based activity an exemplary unique identifier identifies a specific user's action with e.g. a URL. A sender peer and a recipient peer establish a peer-to-peer connection. Each peer sends a list of contacts to the log-in server for identifying preferred peers. The log-in server returns a list of logged-in contacts with network addresses for direct communication and notifies other relevant peers that new peers have joined the network. By utilizing the chat module the sender peer then sends a list of identity-based content information from the content information database to the recipient peer chat module either directly or indirectly through the log-in server. The recipient peer displays the content information to the contact. The sender peer also sends updates. After the initial identity-based content is sent, the sender peer initiates the application module, the content daemon detects content viewing on the application module and updates the content information database. The sender peer sends updated content information to the recipient peer. In response to the sender peer changing content in the application module, the sender peer again sends content information to the recipient peer.

EP 0 665 670 A2 describes a remote file transfer method and apparatus.

### SUMMARY

It is the object of the invention to provide a media, method and system to operate an instant messaging client program, capable of facilitating the introduction of new instant messaging features.

This object is solved by the invention as claimed in the independent claims.

Preferred embodiments are specified in the dependent claims.

Client-side presence documentation is implemented in an instant messaging architecture. In a described implementation, respective presence documents are stored locally at respective client devices. Accordingly, presence information can be shared and disseminated in accordance with a peer to peer paradigm. In another described implementation, presence documents can include presence information that is extensible in accordance with a presence document schema. Consequently, new instant messaging scenarios can be more easily accommodated. In yet another described implementation, new presence information notification messages include deltas representing the changes to presence information items. The changes can be applied to the presence information items based on the deltas to produce a new presence document. If a verification value computed on the new presence document fails to equate to a received confirmation value, then a destination client can request a complete copy of the actual new presence document from the originating client.

Other method, system, approach, apparatus, device, media, procedure, API, arrangement, etc. implementations are described herein.

### BRIEF DESCRIPTION OF THE DRAWINGS

The same numbers are used throughout the drawings to reference like and/or corresponding aspects, features, and components.

FIG. 1 is a block diagram of a conventional instant messaging architecture.

FIG. 2 is a block diagram example of an instant messaging architecture that incorporates client-side presence documentation.

FIG. 3 is an example of an extensible presence document.

FIG. 4 is a block diagram that illustrates an example mechanism for updating presence information at a buddy's client using a new presence document notification message.

FIG. 5 is a block diagram that includes an example of a new presence document notification message.

FIG. 6 is a flow diagram that illustrates an example of a method for updating presence information at a destination client when the presence document of an origin client is maintained at the origin client.

FIG. 7 illustrates an example of a computing (or general device) operating environment that is capable of (wholly or partially) implementing at least one aspect of client-side presence documentation as described herein.

### DETAILED DESCRIPTION

### INTRODUCTION

Conventional instant messaging systems share presence information between users by storing a presence document for each user at a central server. When two users are contacts or buddies, their client programs ping the central server to see each other's presence status as stored at their centrally located presence documents. These conventional approaches have limitations in that the presence document is rather limited in scope because it is remotely located. Furthermore, the server-based approach results in the presence information being updated relatively slowly.

Certain implementations described herein, on the other hand, create a peer to peer presence sharing architecture in which presence documents are stored locally and shared peer to peer. Storing the documents locally enables new presence reporting scenarios, such as reporting what music is currently being played on a person's computing device or the physical location of the device/person, especially with extensible presence documents. These enhanced presence documents can be shared across network(s) in a peer to peer fashion, which allows the presence information to be updated more quickly. To reduce bandwidth, a described implementation provides a methodology in which the differences in presence document fields since the last time a presence document was shared are disseminated instead of an entire updated presence document.

### FOUNDATION

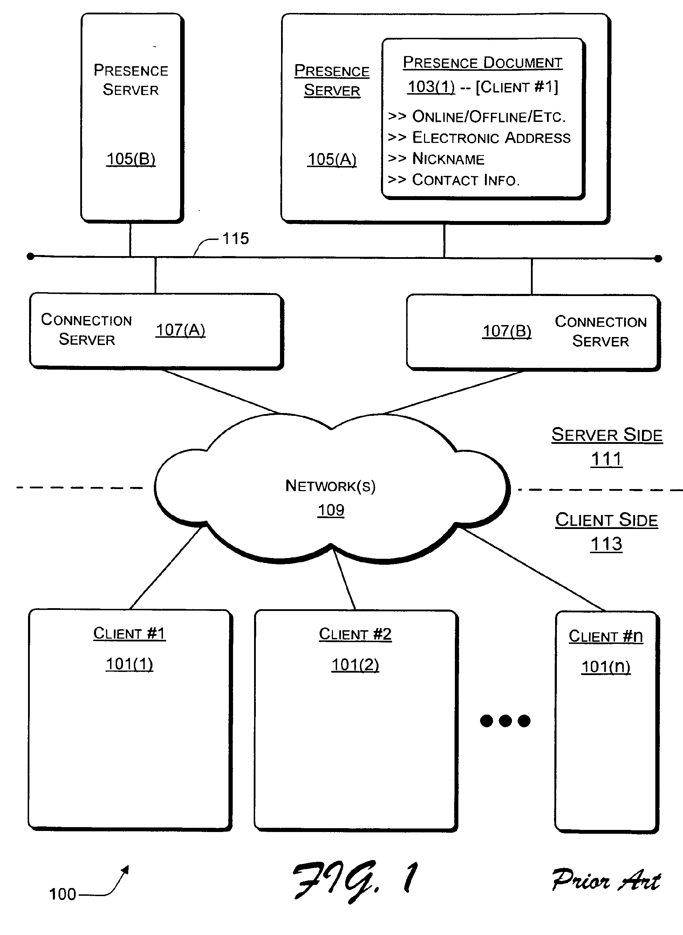

FIG. 1 is a block diagram of a conventional instant messaging architecture 100. As illustrated, architecture 100 is divided into a server side 111 and a client side 113 by one or more networks 109. Client side 113 includes multiple clients 101. Specifically, "n" clients are shown: client #1 101(1), client #2 101(2) ... client #n 101(n). However, any number of clients 101 may theoretically be served within instant messaging architecture 100.

Multiple servers 105 and 107 are also included as part of instant messaging architecture 100 and are interconnected via some type of local area network (LAN) 115. The servers are bifurcated into presence servers 105 and connection servers 107. Specifically, presence server 105(A), presence server 105(B), connection server 107(A), and connection server 107(B) are shown.

Generally, connection servers 107 handle incoming and outgoing connections to and from server side 111 with respect to network 109. Presence servers 105 maintain and make available presence information. Presence servers 105 are accessed through connection servers 107. Although only two each of presence servers 105 and connection servers 107 are shown, instant messaging architecture 100 may include any number of either of such servers. Moreover, server side 111 may be configured differently; for example, server side 111 need not be bifurcated into presence servers and connection servers.

In operation, each client 101 is associated with a presence server 105, and each presence server 105 is associated with multiple clients 101. Presence information for a client 101 is located at the associated presence server 105. As illustrated, client #1 101(1) is associated with presence server 105(A). Consequently, the presence information of client #1 101 (1) is located at presence server 105(A) in the form of a corresponding presence document 103(1). Although not explicitly shown, other clients 101 (2) ... 101 (n) have corresponding presence documents 103 that are stored at presence server 105(A) or presence server 105(B).

In a described implementation, presence document 103(1) includes the presence information for the corresponding client #1 101(1). Such presence information traditionally includes the following: status information (e.g., online, offline, unavailable, etc.), electronic mail address, nickname, and contact information.

Additional aspects of the operation of instant messaging architecture 100 are further described in the context of the following exemplary scenario. Client #1 101(1) and client #2 101(2) are buddies. Consequently, client #2 101(2) is notified of changes to the presence information of presence document 103(1) by instant messaging architecture 100.

Connection servers 107 are typically assigned to clients 101 using a load balancing algorithm. In this example scenario, it is assumed that client #1 101(1) connects to the server-side infrastructure of instant messaging architecture 100 through connection server 107(A) and that client #2 101 (2) connects through connection server 107(B).

Although not specifically illustrated, server side 111 usually maintains four lists for each client 101 to facilitate implementation of the features of instant messaging architecture 100. These four lists are typically stored at presence servers 105. The four lists are: (1) a forward list, (2) an allowed list, (3) a block list, and (4) a dynamic reverse list (DRL). These four lists may be considered to be part of an overall presence profile of client 101. These lists are described below in terms of client # 1 101(1). It should be understood that although the terms "buddies" and "contacts" are used herein as being interchangeable with clients, the terms "buddies", "contacts", and/or "clients" are also interchangeable with a current user of a client device.

The forward list includes those clients 101 that are buddies of client #1 101(1) and that client #1 101(1) is currently interested in being updated about. The allowed list includes those buddies that have been authorized to receive the presence information and updates thereof corresponding to client #1 101(1). The blocked list includes those buddies that are specifically excluded from receiving the presence information or updates thereof of client #1 101(1). The DRL includes those clients 101 that are currently monitoring client #1 101(1) through instant messaging architecture 100.

In this example scenario, it is assumed that client #1 101(1) is already online and that client #2 101 (2) has previously received notification of this online status because client #2 101(2) had subscribed to receive the presence information corresponding to client #1 101 (1). At a first stage, client #1 101(1) goes offline. At a second stage, this offline status is communicated from client #1 101(1) to connection server 107(A) (e.g., using an instant messaging client program (not separately shown) at client #1 101(1)). Connection server 107(A) determines that client #1 101(1) is associated with presence server 105(A) (e.g., via a hashing algorithm or similar).

At stage three, connection server 107(A) forwards to presence server 105(A) notification of the offline status of client #1 101 (1). Presence server 105(A) determines which clients 101 need to be notified of this status change by consulting the DRL corresponding to client #1 101(1). In this example scenario, at least client #2 101(2) is on the DRL corresponding to client #1 101(1). Thus, presence server 105(A) sends a status update message that indicates that client #1 101(1) has gone offline to client #2 101(2) via connection server 107(B). An instant messaging client program at client #2 101(2) receives the status update message and presents an indication that client #1 101(1) has gone offline.

Instant messaging architecture 100 of FIG. 1 is capable of effectively implementing basic instant messaging features. However, instant messaging architecture 100 has a number of shortcomings and drawbacks. First, the amount of presence information that can be maintained and disseminated is constrained. Because of intrinsic storage constraints at server side 111, the amount of presence information per client that can be maintained is effectively limited.

Second, updating software, protocols, schemas, etc. on server side 111 is relatively more difficult, time consuming, risky, and expensive. Accordingly, incorporating new features on server side 111 is usually undertaken far more infrequently as compared to client side 113. This significantly retards the ability to innovate instant messaging architecture 100. Third, routing update notification messages through one or more servers on server side 111 consumes transmission and processing time. This additional overall latency results in relatively slower updates of one's presence information at one's buddies' devices.

### CLIENT-SIDE PRESENCE DOCUMENTATION

Incorporating presence information at client devices enables a greater amount of presence information to be stored for each client, facilitates innovation by at least partly decoupling improvements to an instant messaging architecture from changes to server side infrastructure, and accelerates the dissemination of presence document updates by permitting the server side to be at least partially bypassed.

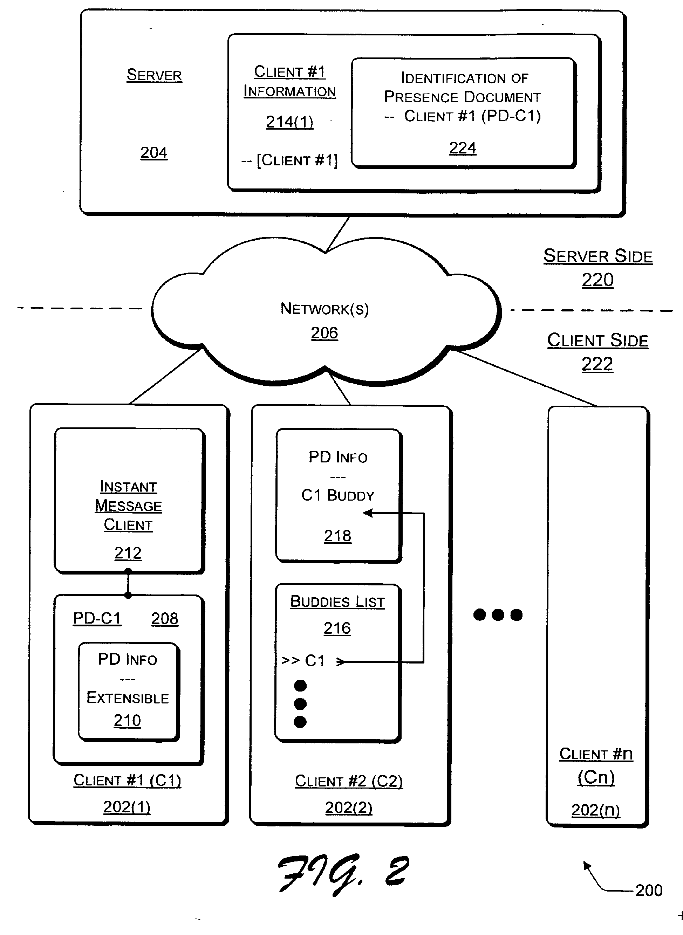

FIG. 2 is a block diagram example of an instant messaging architecture 200 that incorporates client-side presence documentation. In a described implementation, instant messaging architecture 200 is separated into a server side 220 and a client side 222. One or more networks 206 effectively separate instant messaging architecture 200 into client side 222 and server side 220. Network 206 can comprise an internet, a public switched telephone network (PSTN), a local area network (LAN), a wide area network (WAN), a wireless or wired network, some combination thereof, and so forth.

Client side 222 includes multiple clients 202. As illustrated, "n" clients are capable of communicating with server side 220. These "n" clients include client #1 (C1) 202(1), client #2 (C2) 202(2) ... client #n (Cn) 202(n). However, any number of clients 202 may theoretically be operational within instant messaging architecture 200.

Server side 220 includes at least one server 204. Especially in an instant messaging architecture 200 that incorporates client-side presence documentation, server side 220 may be realized in a myriad of configurations. For example, the at least one server 204 may alternatively comprise one or more connection servers and one or more presence servers. Generally, the at least one server 204 may comprise a single server, multiple servers connected to one or more LANs, multiple servers distributed over network 206, some combination thereof, and so forth.

Clients 202 and server 204 are capable of communicating with each other via network 206. Server 204 stores client information 214 for at least a portion of clients 202(1...n). As illustrated, server 204 stores client #1 information 214(1). In instant messaging architecture 200, however, client #1 information 214(1) need not include a presence document. Instead, client #1 information 214(1) includes an identification of the presence document of client #1 (PD-C1) 224. The identification of PD-C1 224 may be, for example, a name of the PD-C 1, a reference to the PD-C1, a pointer to the PD-C 1, a location of the PD-C1, a handle to an object identifying the PD-C1, some combination thereof, and so forth.

Thus, identification of PD-C1 224 identifies PD-C1 208, which is located at client #1 (C1) 202(1) in the client-side presence documentation implementation of instant messaging architecture 200. Client #1 information 214(1) may also include other information relating to client #1, such as any or all of the four lists described herein above (e.g., the DRL).

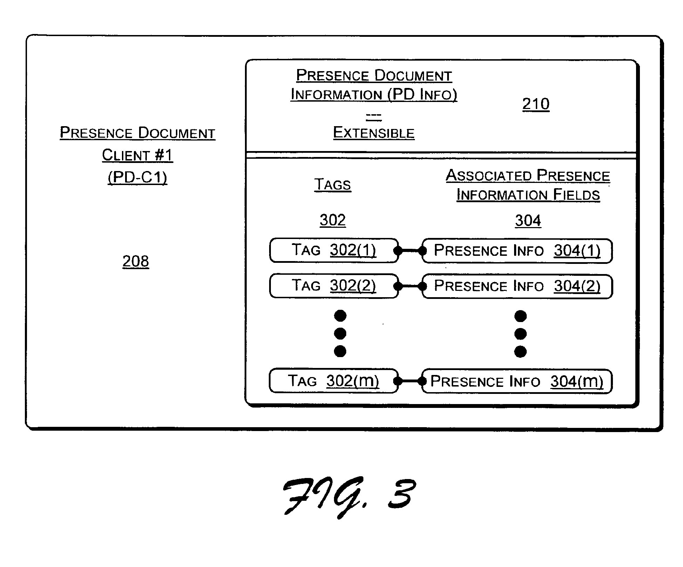

In a described implementation, client #1 202(1) includes an instant message or messaging client program 212 and a related presence document for client #1 (PD-C1) 208. PD-C 1 208 includes presence document (PD) information that is extensible 210. Incorporating extensible PD information 210 creates an extensible PD-C1 208. Because PD-C1 208 is extensible, new, different, and/or varying types of presence information may be more easily introduced, expanded, enhanced, and/or altered in instant messaging architecture 200. An example extensible schema for PD-C1 208 is described further herein below with particular reference to FIG. 3.

An implementation of instant messaging architecture 200 is described further herein using the following example scenario. Client #2 202(2) also includes an instant message client 212 (not explicitly illustrated) and has added client #1 202(1) to his list of buddies 216 (e.g., the forward list of client #2). Client #2 101(2) has likewise subscribed to receive the PD information of client #1 101(1) by being added to the DRL corresponding to client #1 101(1). As described further herein below, the DRL may be located at server 204 and/or client #1 101 (1). Consequently, remote client #2 202(2) is provided the PD information of client #1 218 and updates thereto. As noted above, this PD information is extensible in a described implementation.

FIG. 3 is an example of an extensible presence document for client #1 (PD-C1) 208. PD-C1 208 includes presence document information that is extensible 210. In a described implementation, the extensible PD information 210 includes multiple respective tags 302 that are associated with multiple respective presence information fields 304. As illustrated, tag 302(1) is associated with presence information field 304(1), tag 302(2) is associated with presence information field 304(2) ... tag 302(m) is associated with presence information field 304(m).

Because respective tags 302 indicate the meaning of the presence information in respective fields 304, the presence information may be extended to include new types of presence information. A schema, for example, can be used to define and/or explain the available or included tags 302 and their corresponding meanings.

An example schema for extensible presence documents is: 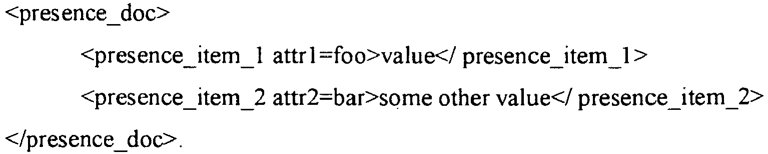 Thus, for a musical category, an artist attribute can be given the value of the performer's name, and a song attribute can be given the value of the song's title. An example format for an extensible presence document is an extensible markup language (XML), but other formats may alternatively be employed.

Examples of presence information that may be included as part of an extensible presence document include, but are not limited to: predetermined status information (e.g., online, offline, away, busy, on-the-phone, etc.), current website being viewed, current music being listened to, other contact buddies that are currently being instant messaged, a current physical location, a personal status message, a software program being executed (e.g., a game, a word processor, etc.), a meeting that is currently being attended, address information about how to connect with a user in a peer to peer fashion, a location of a user's blog, whether or not a webcam session or audio conversation is currently being conducted, a current outlook status, a user's address information for live contact purposes, a network endpoint listening for peer-to-peer connections for session initiation protocol (SIP), anything else that one might want to share about oneself and/or one's online activities with other users, some combination thereof, and so forth.

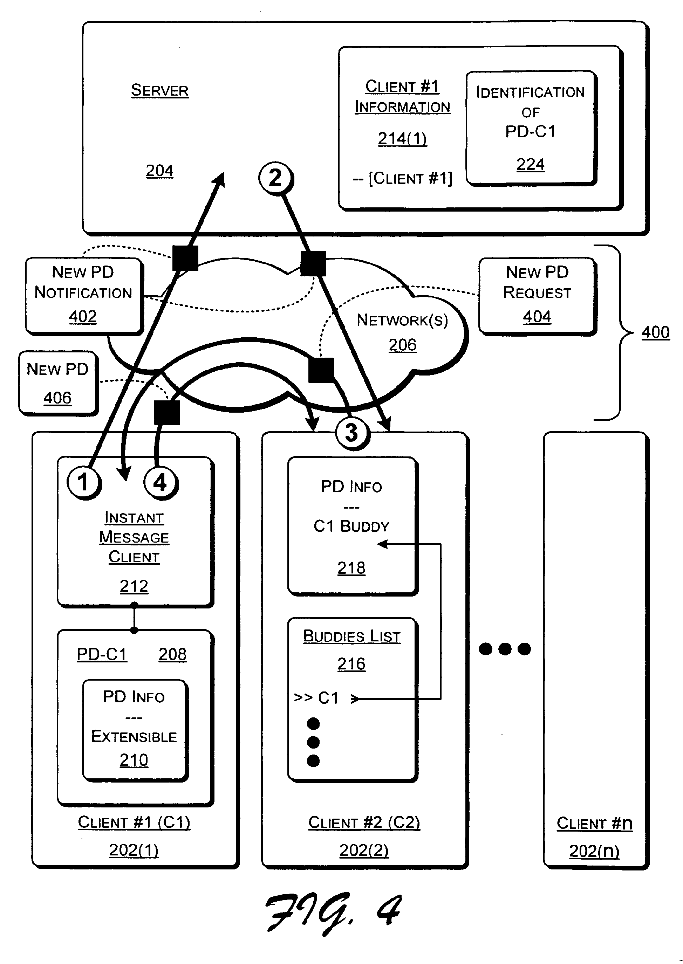

FIG. 4 is a block diagram that illustrates an example mechanism 400 for updating presence information at a buddy's client using a new presence document notification message 402. The example scenario introduced above with reference to FIG. 2 is continued for mechanism 400. Initially, PD information for buddy C1 218, which is a contact buddy of client #2 202(2), is known at client #2 202(2). An instant message client program 212 (not explicitly shown) of client #2 202(2) may display PD information of buddy C1 218 to a user of client #2 202(2).

For a described implementation, mechanism 400 is explained in terms of four (1-4) phases that are indicated in FIG. 4 with encircled numerals and associated arrows. In a first phase, PD information (e.g., extensible PD information 210 of PD-C1 208) undergoes a change. This change might be an addition of new information or an alteration or removal of existing information. In other words, and by way of example only, client #1 202(1) may begin to listen to music or may change to a new song/music source. As part of the first phase, a new PD (information) notification message 402 is sent from client #1 202(1) to server 204.

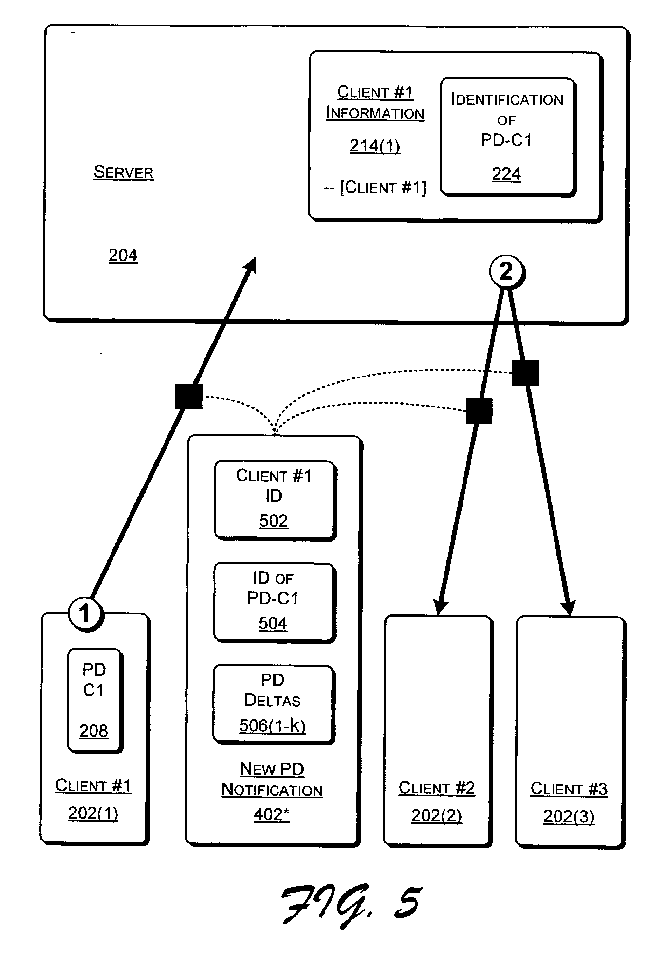

At a second phase, server 204 accesses the DRL for client #1 202(1) and extracts those clients 202 that are currently monitoring client #1 202(1). In the example scenario, these clients 202 include client #2 202(2). Server 204 therefore sends new PD notification message 402 to the clients 202 on the DRL corresponding to client #1 202(1), including client #2 202(2). An example formulation for new PD notification message 402 is described further herein below with particular reference to FIG. 5. Additionally, an alternative implementation described herein below with particular reference to FIG. 5 involves (at least a copy of) the DRL for client #1 202(1) being located at client #1 202(1) and being used by client #1 202(1) to reduce or eliminate server 204 participation in certain actions of the instant messaging system.

At a third phase, client #2 202(2) requests an update of the presence document information for C1 218 from client #1 202(1) using a new PD request message 404. Instant message client program 212 at client #1 101(1) receives new PD request message 404 from client #2 202(2). In response to receiving new PD request message 404, at a fourth phase instant messaging client program 212 sends new PD (information) message 406 from client #1 101(1) to client #2 202(2). New PD message 406 includes at least those part of PD information 210 that have been changed and as much as the entirety of PD-C1 208. After receiving new PD message 406, client #2 202(2) can update PD information for C1 buddy 218 and optionally display the updated PD information 218.

As illustrated in FIG. 4, new PD request message 404 and new PD message 406 are exchanged purely peer to peer without routing through server 204. However, either or both of these two messages 404 and 406 may alternatively be routed through one or more servers such as server 204.

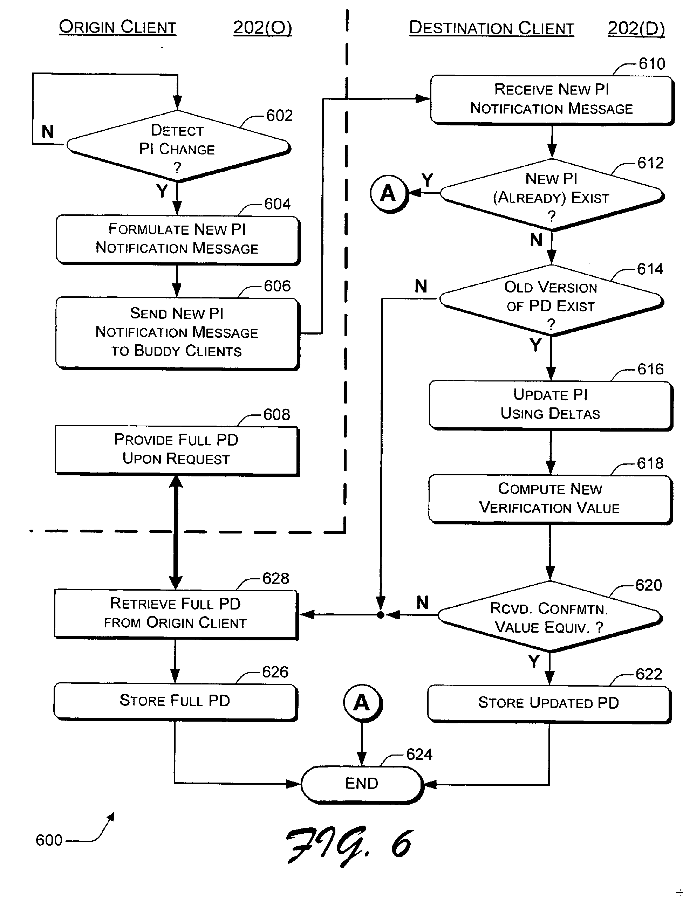

Messages 402, 404, and 406 can relate to an entire presence document (e.g., all of PD-C1 208). Alternatively, one or more of these messages 402, 404, and 406 can relate to only a portion of PD-C1 208. For example, an instant messaging client program of client #2 202(2) might be able to analyze new PD notification message 402 to determine if all or only part of the extensible PD information 210 is required to fully update PD information of buddy C 1 218. An example of this bandwidth-saving implementation is described further herein below with particular reference to FIGS. 5 and 6.

FIG. 5 is a block diagram that includes an example of a new presence document notification message 402*. New PD notification message 402* is a specific example of general new PD notification message 402 (of FIG. 4). As illustrated, new PD notification message 402* includes an identification of client #1 502, an identification of PD-C1 504, and one or more (e.g., "k") PD deltas 506(1-k). These three example portions 502, 504, and 506 of new PD notification message 402* are described below.

In FIG. 5 overall, at a first phase, upon a change to the presence information of PD-C1 208 at client #1 202(1), new PD notification message 402* is transmitted from client #1 202(1) to server 204. At a second phase, after consulting a DRL for client #1 202(1), new PD notification message 402* is transmitted from server 204 to those clients that have subscribed to the presence information of client #1 202(1), as indicated by their being listed on the DRL. In FIG. 5, the two clients 202 receiving new PD notification message 402* are client #2 202(2) and client #3 202(3).

For a first example portion of new PD notification message 402*, client #1 identification 502 indicates the identity of the originating client #1 202(1). Generally, a version of new PD notification message 402* that is transmitted from client #1 202(1) to server 204 may differ from a version of new PD notification message 402* that is transmitted from server 204 to one or more dissemination or destination clients 202(2) and 202(3). For example, client #1 identification 502 may be omitted from the version of new PD notification message 402* that is transmitted from client #1 202(1) to server 204 because the originating client is implicitly known or determinable by server 204.

For a second example portion of new PD notification message 402*, identification of PD-C1 504 identifies PD-C1 208. Identification of PD-C1 504 provides sufficient information to enable interested buddy clients 202 to acquire PD-C1 208 directly or indirectly. For example, identification of PD-C1 504 may be identical to identification of PD-C1 224, which is stored at server 204 and can comprise a reference to PD-C1 208. Thus, it may enable a dissemination client 202 to directly retrieve PD-C1 208 from client #1 202(1). Alternatively, it may merely empower dissemination clients 202 to ask a third device (e.g., server 204, another server, another client 202, a different entity, etc.) to provide PD-C1 208.

By way of example only, identification of PD-C 1 504 may comprise an object store name, and PD-C1 208 may be stored in an object store of client #1 202(1). Object stores are described in US 2005-0004993 A1.

US 2005-0004993 A1 is hereby expressly referred to. Nevertheless, a brief description of an embodiment of object store technology for instant messaging is presented herein. Object store technologies enable respective devices to store data into their respective object stores. Moreover, object store technologies enable one device to locate and retrieve data that is stored into another device's object store.

When storing data into an object store, the object store provides an object store name that enables any properly-configured device to locate the data from the object store name. Consequently, the object store name of data, such as a presence document, can be passed around to enable access to the data by and from other devices. In one described implementation of the aforementioned US 2005-0004993 A1. each object store name comprises a string and is up to one kilobyte in length. The object store name includes, for example, a hash value that changes for each data entity, a name of the file having the data in a client device's memory, a usemame of the client device, and the type of stored data.

An example presence information update situation in the context of object store technology is as follows: First, a song that is being played at an origination device changes. Second, the new song is written into a presence document file (e.g., that is formatted in extensible markup language (XML)). Third, the changed presence document file is saved into the object store. Fourth, the object store provides a new object store name for this stored document. Fifth, the origination device notifies the central server of the new presence document object store name. Sixth, the server sends the new presence document object store name to destination devices that have subscribed to be buddies of the origination device. Seventh, the destination devices receive the new presence document object store name. Eighth, the destination devices ascertain that the presence document has changed based on the new presence document object store name. Ninth, the destination clients can use the new presence document object store name to request a copy of the new presence document from the origination device.

With reference again to FIG. 5, for a third example portion of new PD notification message 402*, PD deltas 506(1-k) comprise "k" deltas or differences of presence information of PD-C 1 208. In other words, instead of automatically transmitting the entirety of PD-C1 208 to interested buddy clients 202(2) and 202(3), client #1 202(1) transmits the changes to individual presence information item(s). Thus, if three presence information items have changed, a PD delta 506(1), a PD delta 506(2), and a PD delta 506(3) are included in new PD notification message 402*.

As noted above, bandwidth consumed by the instant messaging system can be reduced if presence information differences are sent to dissemination clients 202 in lieu of automatically sending the entire PD-C1 208 upon each presence information change. When an interested buddy client 202, such as client #2 202(2), receives new PD notification message 402*, client #2 202(2) institutes the presence information changes indicated by PD deltas 506(1-k). In this sense, new PD notification message 402 (and 402*) more generally comprises a new presence information (PI) notification message.

Afterwards, client #2 202(2) can compute a new verification value based on the new versions of the presence information of client #1 202(1). This verification value is compared to a confirmation value (not explicitly shown in FIG. 5) that is included as part of new PD notification message 402*. If the two values are equivalent, the new PD notification message 402* has been appropriately handled. If, on the other hand, the new verification value is not equivalent to the received confirmation value, then client #2 202(2) requests the complete PD-C1 208 from client #1 202(1). This procedure is described further below with particular reference to FIG. 6.

As an example alternative implementation, server 204 can be omitted fully or partially from the instant messaging architecture as follows. One or more of the four lists described above can be stored at clients 202 instead of at server 204. For instance, a DRL for client #1 202(1) may be stored at client #1 202(1). Thus, when client #2 202(2) subscribes to the instant messaging system to currently monitor the presence information of client #1 202(1), client #1 202(1) adds client #2 202(2) to the DRL located at client #1 202(1). When a presence information item changes, client #1 202(1) can access the locally-stored DRL and send a new PI notification message directly to client #2 202(2) without using server 204 as an intermediary.

FIG. 6 is a flow diagram 600 that illustrates an example of a method for updating presence information at a destination client when the presence document of an origin client is maintained at the origin client. Flow diagram 600 includes fourteen (14) blocks. Although the actions of flow diagram 600 may be performed in other environments and with a variety of hardware and software combinations, FIGS. 2-5 are used in particular to illustrate certain aspects and examples of the method. By way of example only, the four (4) actions 602-608 of flow diagram 600 may be performed by an instant messaging program client 212 on an origin client 202(O) (e.g., client #1 202(1)), and the ten (10) actions 610-628 may be performed by an instant messaging program client 212 on a destination/dissemination client 202(D) (e.g. client #2 202(2)).

At block 602, it is detected if there is a change to presence information. For example, origin client 202(O) may detect if/when a change to its presence information occurs. The detecting continues until a change is detected. After a change is detected (at block 602), at block 604 a new presence information (PI) notification message is formulated. For example, origin client 202(O) may formulate a new PI notification message akin to new PD notification message 402*. For instance, the new PI notification message may include an identification of origin client 202(O), an identification of the PD of origin client 202(O) (e.g., a reference to the presence document), at least one PI delta, and a confirmation value. The confirmation value may be, for example, a hash value determined responsive to the new PD.

At block 606, the new PI notification message is sent to buddy clients. For example, the new PI notification message may be sent from origin client 202(O) to those buddy clients that are listed on the DRL of origin client 202(O). In this example, those buddy clients include destination client 202(D). The new PI notification message may be sent from origin client 202(O) to destination client 202(D) across network 206 either via server 204 or directly (i.e., directly by bypassing server 204 using a locally-stored DRL).

At block 610, the new PI notification message is received. For example, the new PI notification message may be received at destination client 202(D). At block 612, it is ascertained if the new PI already exists. For example, destination client 202(D) may compare the received confirmation value (i) to an existing verification value corresponding to the PD for origin client 202(O) as already stored at destination client 202(D) and/or (ii) to a previously-received confirmation value. If for some reason the PI has already been updated, then the flowchart ends at block 624. Otherwise, the new PI does not already exist, and the method continues at block 614.

At block 614, it is ascertained if an old version of the PD exists. For example, it may be ascertained if a previous version of the PD for origin client 202(O) already exists at destination client 202(D). If not, then the method continues at block 628, which is described further herein below. If, on the other hand, a previous version of the PD does exist at destination client 202(D), then the method continues at block 616.

At block 616, the presence information is updated using the received deltas. For example, destination client 202(D) can update the PI in the PD corresponding to origin client 202(O) based on the at least one PI delta received with the new PI notification message. For instance, the previous PI value may be replaced by the received delta value. The different PI fields 304 may be identified by associated tags 302.

At block 618, a new verification value is computed. For example, destination client 202(D) may compute a new verification value responsive to the new PD as updated with the PI deltas. The verification value may be computed, for example, using a hashing algorithm, such as a cryptographic hash. Examples of cryptographic hashes include SHA-1, MD5, and so forth. Another example verification operation or procedure can utilize deltas comprising the actual change data and a version number. With such a delta/version number implementation, if a remote client's current version number for the buddy is one less than the one received in the new PD message, the remote client can apply the change(s) to match the PD for the latest version number. If, however, the remote client's version number differs by more than one, it is apparent that the remote client missed one or more updates from the buddy and that the remote instant messaging client needs to get a complete new version of the PD.

At block 620, it is determined if the received confirmation value is equivalent to the computed verification value. For example, it may be determined if the confirmation value received in the new PI notification message is equivalent (e.g., equal) to the verification value computed responsive to the new PD as updated with the PI deltas. If not (e.g., because a remote client was offline during one or more previous delta type updates from a buddy client), then the method continues at block 628, which is described further herein below. If, on the other hand, the received confirmation value is determined to be equivalent to the computed verification value, then the method continues at block 622.

At block 622, the new updated PD is stored. For example, the updated PD corresponding to origin client 202(O) may be stored at destination client 202(D). The updated PI may also be displayed or otherwise communicated to a user of destination client 202(D). In other words, from a more general perspective, the updated PD may be utilized by storing it, by communicating PI to a user, by otherwise performing an instant-messaging-related action, and so forth. At block 624, the method of flowchart 600 ends.

The action(s) of block 628 are performed when destination client 202(D) does not have an old version of the PD of origin client 202(O) (as ascertained at block 614) or when an updated new version of the PD of origin client 202(O) does not check out to be accurate (e.g., by a comparison of hash values at block 620). At block 628, a copy of the full PD is retrieved from the origin client. For example, destination client 202(D) may request from origin client 202(O) via a new PD request message 404 a full PD of origin client 202(O). This request may be effectuated using the identification of the PD of origin client 202(O) (and/or the identification of origin client 202(O)).

At block 608, a copy of the full PD is provided upon request. For example, origin client 202(O) may provide PD-C 1 208 to destination client 202(D) in a new PD message 406. After receiving a copy of the full PD from the origin client (with the retrieval of block 628), at block 626 the full actual PD is stored at destination client. Alternatively, and more generally, the full actual PD is utilized at destination client 202(D). The method of flowchart 600 ends at block 624.

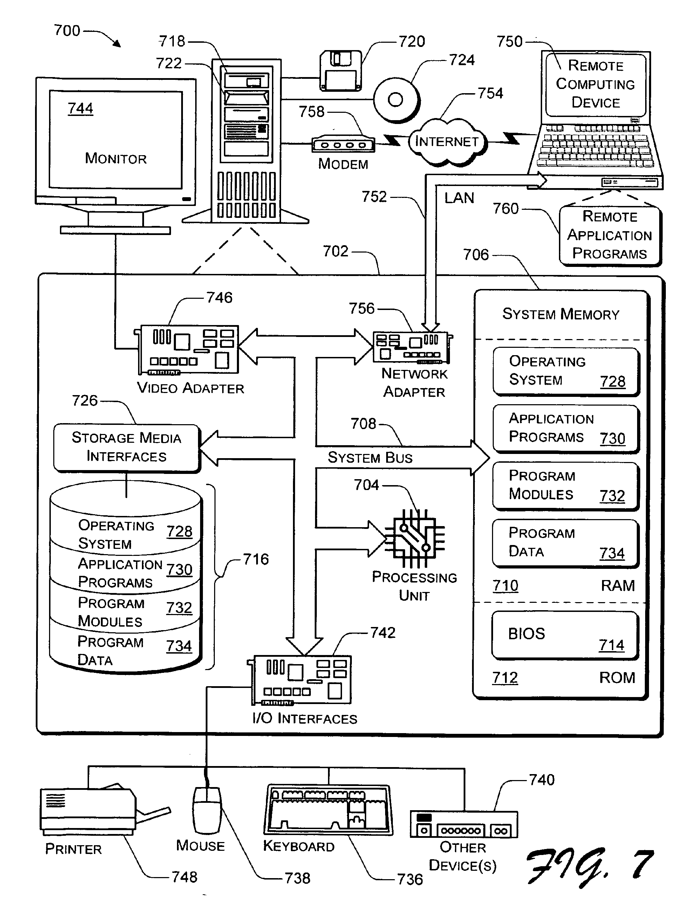

The devices, actions, aspects, features, functions, procedures, modules, data structures, programs, components, etc. of FIGS. 1-6 are illustrated in diagrams that are divided into multiple blocks. However, the order, interconnections, interrelationships, layout, etc. in which FIGS. 1-6 are described and/or shown is not intended to be construed as a limitation, and any number of the blocks can be modified, combined, rearranged, augmented, omitted, etc. in any manner to implement one or more systems, methods, devices, procedures, media, apparatuses, APIs, schemas, arrangements, etc. for client-side presence documentation. Furthermore, although the description herein includes references to specific implementations (including a general device of FIG. 7), the illustrated and/or described implementations can be implemented in any suitable hardware, software, firmware, or combination thereof and using any suitable presence document formulation(s), presence document schema(s), transmission protocol(s), message format(s), and/or verification algorithm(s), and so forth.

### EXAMPLE OPERATING ENVIRONMENT FOR COMPUTER OR OTHER DEVICE

FIG. 7 illustrates an example computing (or general device) operating environment 700 that is capable of (fully or partially) implementing at least one system, device, apparatus, component, arrangement, protocol, approach, method, procedure, media, application programming interface (API), schema, some combination thereof, etc. for client-side presence documentation as described herein. Operating environment 700 may be utilized in the computer and network architectures described below.

Example operating environment 700 is only one example of an environment and is not intended to suggest any limitation as to the scope of use or functionality of the applicable device (including computer, network node, entertainment device, mobile appliance, general electronic device, etc.) architectures. Neither should operating environment 700 (or the devices thereof) be interpreted as having any dependency or requirement relating to any one or to any combination of components as illustrated in FIG. 7.

Additionally, implementations for client-side presence documentation may be realized with numerous other general purpose or special purpose device (including computing system) environments or configurations. Examples of well known devices, systems, environments, and/or configurations that may be suitable for use include, but are not limited to, personal computers, server computers, thin clients, thick clients, personal digital assistants (PDAs) or mobile telephones, watches, hand-held or laptop devices, multiprocessor systems, microprocessor-based systems, set-top boxes, programmable consumer electronics, video game machines, game consoles, portable or handheld gaming units, network PCs, videoconferencing equipment, minicomputers, mainframe computers, network nodes, distributed or multi-processing computing environments that include any of the above systems or devices, some combination thereof, and so forth.

Implementations for client-side presence documentation may be described in the general context of processor-executable instructions. Generally, processor-executable instructions include routines, programs, protocols, objects, functions, interfaces, components, data structures, etc. that perform and/or enable particular tasks and/or implement particular abstract data types. Realizations for client-side presence documentation, as described in certain implementations herein, may also be practiced in distributed processing environments where tasks are performed by remotely-linked processing devices that are connected through a communications link and/or network. Especially but not exclusively in a distributed computing environment, processor-executable instructions may be located in separate storage media, executed by different processors, and/or propagated over transmission media.

Example operating environment 700 includes a general-purpose computing device in the form of a computer 702, which may comprise any (e.g., electronic) device with computing/processing capabilities. The components of computer 702 may include, but are not limited to, one or more processors or processing units 704, a system memory 706, and a system bus 708 that couples various system components including processor 704 to system memory 706.

Processors 704 are not limited by the materials from which they are formed or the processing mechanisms employed therein. For example, processors 704 may be comprised of semiconductor(s) and/or transistors (e.g., electronic integrated circuits (ICs)). In such a context, processor-executable instructions may be electronically-executable instructions. Alternatively, the mechanisms of or for processors 704, and thus of or for computer 702, may include, but are not limited to, quantum computing, optical computing, mechanical computing (e.g., using nanotechnology), and so forth.

System bus 708 represents one or more of any of many types of wired or wireless bus structures, including a memory bus or memory controller, a point-to-point connection, a switching fabric, a peripheral bus, an accelerated graphics port, and a processor or local bus using any of a variety of bus architectures. By way of example, such architectures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnects (PCI) bus also known as a Mezzanine bus, PCI express, some combination thereof, and so forth.

Computer 702 typically includes a variety of processor-accessible media. Such media may be any available media that is accessible by computer 702 or another (e.g., electronic) device, and it includes both volatile and non-volatile media, removable and non-removable media, and storage and transmission media.

System memory 706 includes processor-accessible storage media in the form of volatile memory, such as random access memory (RAM) 710, and/or non-volatile memory, such as read only memory (ROM) 712. A basic input/output system (BIOS) 714, containing the basic routines that help to transfer information between elements within computer 702, such as during start-up, is typically stored in ROM 712. RAM 710 typically contains data and/or program modules/instructions that are immediately accessible to and/or being presently operated on by processing unit 704.

Computer 702 may also include other removable/non-removable and/or volatile/non-volatile storage media. By way of example, FIG. 7 illustrates a hard disk drive or disk drive array 716 for reading from and writing to a (typically) non-removable, non-volatile magnetic media (not separately shown); a magnetic disk drive 718 for reading from and writing to a (typically) removable, non-volatile magnetic disk 720 (e.g., a "floppy disk"); and an optical disk drive 722 for reading from and/or writing to a (typically) removable, non-volatile optical disk 724 such as a CD, DVD, or other optical media. Hard disk drive 716, magnetic disk drive 718, and optical disk drive 722 are each connected to system bus 708 by one or more storage media interfaces 726. Alternatively, hard disk drive 716, magnetic disk drive 718, and optical disk drive 722 may be connected to system bus 708 by one or more other separate or combined interfaces (not shown).

The disk drives and their associated processor-accessible media provide non-volatile storage of processor-executable instructions, such as data structures, program modules, and other data for computer 702. Although example computer 702 illustrates a hard disk 716, a removable magnetic disk 720, and a removable optical disk 724, it is to be appreciated that other types of processor-accessible media may store instructions that are accessible by a device, such as magnetic cassettes or other magnetic storage devices, flash memory, compact disks (CDs), digital versatile disks (DVDs) or other optical storage, RAM, ROM, electrically-erasable programmable read-only memories (EEPROM), and so forth. Such media may also include so-called special purpose or hard-wired IC chips. In other words, any processor-accessible media may be utilized to realize the storage media of the example operating environment 700.

Any number of program modules (or other units or sets of processor-executable instructions) may be stored on hard disk 716, magnetic disk 720, optical disk 724, ROM 712, and/or RAM 710, including by way of general example, an operating system 728, one or more application programs 730, other program modules 732, and program data 734. These processor-executable instructions may include, for example, one or more of: a presence document 208 having extensible presence information 210, an instant message client 212, messages 402/402*/404/406, a schema describing the extensible presence information 210, some combination thereof, and so forth.

A user may enter commands and/or information into computer 702 via input devices such as a keyboard 736 and a pointing device 738 (e.g., a "mouse"). Other input devices 740 (not shown specifically) may include a microphone, joystick, game pad, satellite dish, serial port, video camera, scanner, and/or the like. These and other input devices are connected to processing unit 704 via input/output interfaces 742 that are coupled to system bus 708. However, input devices and/or output devices may instead be connected by other interface and bus structures, such as a parallel port, a game port, a universal serial bus (USB) port, an infrared port, an IEEE 1394 ("Firewire") interface, an IEEE 802.11 wireless interface, a Bluetooth® wireless interface, and so forth.

A monitor/view screen 744 or other type of display device may also be connected to system bus 708 via an interface, such as a video adapter 746. Video adapter 746 (or another component) may be or may include a graphics card for processing graphics-intensive calculations and for handling demanding display requirements. Typically, a graphics card includes a graphics processing unit (GPU), video RAM (VRAM), etc. to facilitate the expeditious display of graphics and performance of graphics operations. In addition to monitor 744, other output peripheral devices may include components such as speakers (not shown) and a printer 748, which may be connected to computer 702 via input/output interfaces 742.

Computer 702 may operate in a networked environment using logical connections to one or more remote computers, such as a remote computing device 750. By way of example, remote computing device 750 may be a peripheral device, a personal computer, a portable computer (e.g., laptop computer, tablet computer, PDA, mobile station, etc.), a palm or pocket-sized computer, a watch, a gaming device, a server, a router, a network computer, a peer device, another network node, or another device type as listed above, and so forth. However, remote computing device 750 is illustrated as a portable computer that may include many or all of the elements and features described herein with respect to computer 702.

Logical connections between computer 702 and remote computer 750 are depicted as a local area network (LAN) 752 and a general wide area network (WAN) 754. Such networking environments are commonplace in offices, enterprise-wide computer networks, intranets, the Internet, fixed and mobile telephone networks, ad-hoc and infrastructure wireless networks, mesh networks, other wireless networks, gaming networks, some combination thereof, and so forth. Such networks and logical and physical communications connections are additional examples of transmission media.

When implemented in a LAN networking environment, computer 702 is usually connected to LAN 752 via a network interface or adapter 756. When implemented in a WAN networking environment, computer 702 typically includes a modem 758 or other component for establishing communications over WAN 754. Modem 758, which may be internal or external to computer 702, may be connected to system bus 708 via input/output interfaces 742 or any other appropriate mechanism(s). It is to be appreciated that the illustrated network connections are examples and that other manners for establishing communication link(s) between computers 702 and 750 may be employed.

In a networked environment, such as that illustrated with operating environment 700, program modules or other instructions that are depicted relative to computer 702, or portions thereof, may be fully or partially stored in a remote media storage device. By way of example, remote application programs 760 reside on a memory component of remote computer 750 but may be usable or otherwise accessible via computer 702. Also, for purposes of illustration, application programs 730 and other processor-executable instructions such as operating system 728 are illustrated herein as discrete blocks, but it is recognized that such programs, components, and other instructions reside at various times in different storage components of computing device 702 (and/or remote computing device 750) and are executed by processor(s) 704 of computer 702 (and/or those of remote computing device 750).

Although systems, media, devices, methods, procedures, apparatuses, techniques, schemes, approaches, procedures, arrangements, and other implementations have been described in language specific to structural, logical, algorithmic, and functional features and/or diagrams, it is to be understood that the invention defined in the appended claims is not necessarily limited to the specific features or diagrams described. Rather, the specific features and diagrams are disclosed as exemplary forms of implementing the claimed invention.

## Claims

1. One or more processor-accessible media (706, 716, 718, 720, 722, 724, 740, 750) including processor-executable instructions that comprise at least part of an instant messaging client program (212);
wherein the instant messaging client program is capable of storing a presence document (208) locally;
wherein the instant messaging client program is adapted to provide (608) at least a portion (406) of the presence document to a remote client (202(2), 202(D), 702, 750) in accordance with a peer to peer paradigm;
wherein the instant messaging client program is further adapted to issue (604, 606) a new presence information notification message (402, 402*) that is transmitted to the remote client in response to a change to presence information of the locally-stored presence document;
wherein the new presence information notification message includes an identification (504) of the presence document comprising an object store name that enables the remote client to request (628) the presence document from an object store of a device (202(1), 202(0), 702, 750) on which the instant messaging client program is currently executing;
wherein the remote client comprises a remote instant messaging client program;
wherein the instant messaging client program is further capable of storing a dynamic reverse list, DRL, that includes the remote instant messaging client program; and
wherein the instant messaging client program is further adapted to transmit the new presence information notification message across one or more networks (206, 752, 754) to the remote instant messaging client program without routing through a central instant messaging server (204).

2. The one or more processor-accessible media as recited in claim 1, wherein the new presence information notification message includes at least one respective delta (506(1-k)) that indicates a change to at least one respective presence information item.

3. The one or more processor-accessible media as recited in claim 1 or 2, wherein the presence document comprises one or more presence information items selected from a group of presence information items comprising: predetermined status information, an electronic mail address, a nickname, a current website being viewed, a current musical selection being listened to, a current physical location, a personal status message, a software program being executed, other contact buddies that are currently being instant messaged, a meeting that is currently being attended, information about how to connect with a user in a peer to peer fashion, a location of a user's blog, whether or not a webcam session or audio conversation is currently being conducted, a current outlook status, and a user's address information for live contact purposes.

4. A method of operating an instant messaging client program (212), comprising:
storing a presence document (208) locally;
providing (608) at least a portion (406) of the presence document to a remote client (202(2), 202(D), 702, 750) in accordance with a peer to peer paradigm; and
issuing (604, 606) a new presence information notification message (402, 402*) that is transmitted to the remote client in response to a change to presence information of the locally-stored presence document;
wherein the new presence information notification message includes an identification (504) of the presence document comprising an object store name that enables the remote client to request (628) the presence document from an object store of a device (202(1), 202(0), 702, 750) on which the instant messaging client program is currently executing;
wherein the remote client comprises a remote instant messaging client program;
wherein the instant messaging client program is further capable of storing a dynamic reverse list, DRL, that includes the remote instant messaging client program; and
wherein the method of operating the instant messaging client program further comprises transmitting the new presence information notification message across one or more networks (206, 752, 754) to the remote instant messaging client program without routing through a central instant messaging server (204).

5. The method as recited in claim 4, further comprising operating the instant messaging client program included in the processor-accessible media as recited in claim 2 or 3.

6. A computer system (700) adapted to operate an instant messaging client program (212), comprising:
means for storing a presence document (208) locally;
means for providing (608) at least a portion (406) of the presence document to a remote client (202(2), 202(D), 702, 750) in accordance with a peer to peer paradigm; and
means for issuing (604, 606) a new presence information notification message (402, 402*) that is transmitted to the remote client in response to a change to presence information of the locally-stored presence document;
wherein the new presence information notification message includes an identification (504) of the presence document comprising an object store name that enables the remote client to request (628) the presence document from an object store of a device (202(1), 202(0), 702, 750) on which the instant messaging client program is currently executing;
wherein the remote client comprises a remote instant messaging client program;
wherein the instant messaging client program is further capable of storing a dynamic reverse list, DRL, that includes the remote instant messaging client program; and
wherein the system further comprises means for operating the instant messaging client program to transmit the new presence information notification message across one or more networks (206, 752, 754) to the remote instant messaging client program without routing through a central instant messaging server (204).

7. The computer system as recited in claim 6, further being adapted to operate the instant messaging client program included in the processor-accessible media as recited in claim 2 or 3.

## Patentansprüche

1. Ein oder mehrere durch einen Prozessor zugreifbare Medien (706, 716, 718, 720, 722, 724, 740, 750), die durch einen Prozessor ausführbare Befehle enthalten, welche zumindest einen Teil eines Instant-Messaging-Client-Programms (212) umfassen;
wobei das Instant-Messaging-Client-Programm dazu fähig ist, ein Präsenzdokument (208) lokal zu speichern;
wobei das Instant-Messaging-Client-Programm dazu eingerichtet ist, zumindest einen Teil (406) des Präsenzdokuments nach dem Peer-to-Peer-Prinzip an einen entfernten Client (202(2), 202(D), 702, 750) bereitzustellen;
wobei das Instant-Messaging-Client-Programm des Weiteren dazu eingerichtet ist, eine Benachrichtigungsnachricht (402, 402*) über neue Präsenzinformationen auszugeben (604, 606), die in Reaktion auf eine Änderung an den Präsenzinformationen des lokal gespeicherten Präsenzdokuments an den entfernten Client übermittelt wird;
wobei die Benachrichtigungsnachricht über neue Präsenzinformationen eine Identifikation (504) des Präsenzdokuments beinhaltet, umfassend einen Objektspeichernamen, der es dem entfernten Client ermöglicht, das Präsenzdokument von einem Objektspeicher eines Geräts (202(1), 202(0), 702, 750) abzurufen, auf dem das Instant-Messaging-Client-Programm gegenwärtig ausgeführt wird;
wobei der entfernte Client ein entferntes Instant-Messaging-Client-Programm umfasst;
wobei das Instant-Messaging-Client-Programm des Weiteren dazu fähig ist, eine dynamische umgekehrte Liste (Dynamic Reverse List, DRL) zu speichern, die das entfernte Instant-Messaging-Client-Programm enthält; und
wobei das Instant-Messaging-Client-Programm des Weiteren dazu eingerichtet ist, die Benachrichtigungsnachricht über neue Präsenzinformationen über ein oder mehrere Netzwerke (206, 752, 754) ohne Routing durch einen zentralen Instant-Messaging-Server (204) an das entfernte Instant-Messaging-Client-Programm zu übermitteln.

2. Ein oder mehrere durch einen Prozessor zugreifbare Medien nach Anspruch 1, wobei die Benachrichtigungsnachricht über neue Präsenzinformationen mindestens ein jeweiliges Delta (506(1-k)) beinhaltet, das eine Änderung an mindestens einer jeweiligen Präsenzinformation anzeigt.

3. Ein oder mehrere durch ein Prozessor zugreifbare Medien nach Anspruch 1 oder 2, wobei das Präsenzdokument eine oder mehrere Präsenzinformationen umfasst, die aus einer Gruppe von Präsenzinformationen ausgewählt werden, welche umfasst: vorgegebene Statusinformationen, eine E-Mail-Adresse, einen Spitznamen, eine aktuell angezeigte Webseite, eine aktuell angehörte Musikauswahl, einen aktuellen physischen Standort, eine persönliche Statusnachricht, ein ausgeführtes Softwareprogramm, andere Kontakte, die aktuell über Instant-Messaging benachrichtigt werden, eine Besprechung, an der aktuell teilgenommen wird, Informationen zur Herstellung einer Peer-to-Peer-Verbindung, einen Ort eines Blogs eines Benutzers, ob aktuell eine Webcam-Sitzung oder Audiokonversation durchgeführt wird, einen aktuellen Outlook-Status und die Adressinformationen eines Benutzers zum Zwecke eines Live-Kontakts.

4. Verfahren zum Ausführen eines Instant-Messaging-Client-Programms (212), umfassend:
lokales Speichern eines Präsenzdokuments (208);
Bereitstellen (608) von zumindest einem Teil (406) des Präsenzdokuments nach dem Peer-to-Peer-Prinzip an einen entfernten Client (202(2), 202(D), 702, 750); und
Ausgeben (604, 606) einer Benachrichtigungsnachricht (402, 402*) über neue Präsenzinformationen, die in Reaktion auf eine Änderung an den Präsenzinformationen des lokal gespeicherten Präsenzdokuments an den entfernten Client übermittelt wird;
wobei die Benachrichtigungsnachricht über neue Präsenzinformationen eine Identifikation (504) des Präsenzdokuments beinhaltet, umfassend einen Objektspeichernamen, der es dem entfernten Client ermöglicht, das Präsenzdokument von einem Objektspeicher eines Geräts (202(1), 202(0), 702, 750) anzufordern (628), auf dem das Instant-Messaging-Client-Programm gegenwärtig ausgeführt wird;
wobei der entfernte Client ein entferntes Instant-Messaging-Client-Programm umfasst;
wobei das Instant-Messaging-Client-Programm des Weiteren dazu fähig ist, eine dynamische umgekehrte Liste (Dynamic Reverse List, DRL) zu speichern, die das entfernte Instant-Messaging-Client-Programm enthält; und
wobei das Verfahren zum Ausführen des Instant-Messaging-Client-Programms des Weiteren das Übermitteln der Benachrichtigungsnachricht über neue Präsenzinformationen über ein oder mehrere Netzwerke (206, 752, 754) ohne Routing durch einen zentralen Instant-Messaging-Server (204) an das entfernte Instant-Messaging-Client-Programm umfasst.

5. Verfahren nach Anspruch 4, des Weiteren umfassend das Ausführen des Instant-Messaging-Client-Programms, das in den durch einen Prozessor zugreifbaren Medien nach Anspruch 2 oder 3 enthalten ist.

6. Computersystem (700), das dazu eingerichtet ist, ein Instant-Messaging-Client-Programm (212) auszuführen, umfassend:
Mittel zum lokalen Speichern eines Präsenzdokuments (208);
Mittel zum Bereitstellen (608) von zumindest einem Teil (406) des Präsenzdokuments nach dem Peer-to-Peer-Prinzip an einen entfernten Client (202(2), 202(D), 702, 750); und
Mittel zum Ausgeben (604, 606) einer Benachrichtigungsnachricht (402, 402*) über neue Präsenzinformationen, die in Reaktion auf eine Änderung an den Präsenzinformationen des lokal gespeicherten Präsenzdokuments an den entfernten Client übermittelt wird;
wobei die Benachrichtigungsnachricht über neue Präsenzinformationen eine Identifikation (504) des Präsenzdokuments beinhaltet, umfassend einen Objektspeichernamen, der es dem entfernten Client ermöglicht, das Präsenzdokument von einem Objektspeicher eines Geräts (202(1), 202(0), 702, 750) anzufordern (628), auf dem das Instant-Messaging-Client-Programm gegenwärtig ausgeführt wird;
wobei der entfernte Client ein entferntes Instant-Messaging-Client-Programm umfasst;
wobei das Instant-Messaging-Client-Programm des Weiteren dazu fähig ist, eine dynamische umgekehrte Liste (Dynamic Reverse List, DRL) zu speichern, die das entfernte Instant-Messaging-Client-Programm enthält; und
wobei das System des Weiteren Mittel zum Ausführen des Instant-Messaging-Client-Programms umfasst, um die Benachrichtigungsnachricht über neue Präsenzinformationen über ein oder mehrere Netzwerke (206, 752, 754) ohne Routing durch einen zentralen Instant-Messaging-Server (204) an das entfernte Instant-Messaging-Client-Programm zu übermitteln.

7. Computersystem nach Anspruch 6, das des Weiteren dazu eingerichtet ist, das Instant-Messaging-Client-Programm, welches in den durch einen Prozessor zugreifbaren Medien nach Anspruch 2 oder 3 enthalten ist, auszuführen.

## Revendications

1. Un ou plusieurs supports accessibles par un processeur (706, 716, 718, 720, 722, 724, 740, 750) comprenant des instructions exécutables par un processeur qui comprennent au moins une partie d'un logiciel client de messagerie instantanée (212) ;
dans lesquels le logiciel client de messagerie instantanée est capable de stocker localement un document de présence (208) ;
dans lesquels le logiciel client de messagerie instantanée est adapté pour fournir (608) au moins une partie (406) du document de présence à un client distant (202(2), 202(D), 702, 750) conformément à un paradigme pair-à-pair ;
dans lesquels le logiciel client de messagerie instantanée est en outre adapté pour envoyer (604, 606) un nouveau message de notification d'information de présence (402, 402*) qui est transmis au client distant en réponse à un changement d'information de présence du document de présence stocké localement ;
dans lesquels le nouveau message de notification d'information de présence comprend une identification (504) du document de présence comprenant un nom de stockage d'objets qui permet au client distant de requérir (628) le document de présence à un stockage d'objets d'un dispositif (202(1), 202(0), 702, 750) sur lequel le logiciel client de messagerie instantanée est en cours d'exécution ;
dans lesquels le client distant comprend un logiciel client de messagerie instantanée distant ;
dans lesquels le logiciel client de messagerie instantanée est en outre capable de stocker une liste inverse dynamique DRL, soit Dynamic Reverse List, qui comprend le logiciel client de messagerie instantanée distant ; et
dans lesquels le logiciel client de messagerie instantanée est en outre adapté pour transmettre le nouveau message de notification d'information de présence à travers un ou plusieurs réseaux (206, 752, 754) au logiciel client de messagerie instantanée distant sans routage via un serveur de messagerie instantanée central (204).

2. Un ou plusieurs supports accessibles par un processeur selon la revendication 1, dans lesquels le nouveau message de notification d'information de présence comprend au moins un différentiel respectif (506(1-k)) qui indique un changement d'au moins un élément d'information de présence respectif.

3. Un ou plusieurs supports accessibles par un processeur selon la revendication 1 ou 2, dans lesquels le document de présence comprend un ou plusieurs éléments d'information de présence sélectionnés parmi un groupe d'éléments d'information de présence comprenant : de l'information d'état prédéterminée, une adresse de courrier électronique, un surnom, un site web en cours de visualisation, une sélection musicale en cours d'écoute, une position physique actuelle, un message d'état personnel, un logiciel en cours d'exécution, d'autres relations de contact avec lesquelles une communication par messagerie instantanée est en cours, une réunion qui est en cours, de l'information concernant la manière de se connecter avec un utilisateur en mode pair-à-pair, une position d'un blog d'utilisateur, qu'une session webcam ou une conversation audio soit ou non en cours, un état de prévision actuel, et une information d'adresse d'utilisateur à des fins de contact en temps réel.

4. Procédé d'utilisation d'un logiciel client de messagerie instantanée (212), comprenant :
le stockage d'un document de présence (208) localement ;
la fourniture (608) d'au moins une partie (406) du document de présence à un client distant (202(2), 202(D), 702, 750) conformément à un paradigme pair-à-pair ; et
l'envoi (604, 606) d'un nouveau message de notification d'information de présence (402, 402*) qui est transmis au client distant en réponse à un changement d'information de présence du document de présence stocké localement ;
dans lequel le nouveau message de notification d'information de présence comprend une identification (504) du document de présence comprenant un nom de stockage d'objets qui permet au client distant de requérir (628) le document de présence à un stockage d'objets d'un dispositif (202(1), 202(0), 702, 750) sur lequel le logiciel client de messagerie instantanée est en cours d'exécution ;
dans lequel le client distant comprend un logiciel client de messagerie instantanée distant ;
dans lequel le logiciel client de messagerie instantanée est en outre capable de stocker une liste inverse dynamique DRL qui comprend le logiciel client de messagerie instantanée distant ; et
dans lequel le procédé d'utilisation du logiciel client de messagerie instantanée comprend en outre la transmission du nouveau message de notification d'information de présence à travers un ou plusieurs réseaux (206, 752, 754) au logiciel client de messagerie instantanée distant sans routage via un serveur de messagerie instantanée central (204).

5. Procédé selon la revendication 4, comprenant en outre l'utilisation du logiciel client de messagerie instantanée inclus sur les supports accessibles par un processeur selon la revendication 2 ou 3.

6. Système informatique (700) adapté pour faire fonctionner un logiciel client de messagerie instantanée (212), comprenant :
un moyen de stockage d'un document de présence (208) localement ;
un moyen de fourniture (608) d'au moins une partie (406) du document de présence à un client distant (202(2), 202(D), 702, 750) conformément à un paradigme pair-à-pair ; et
un moyen d'envoi (604, 606) d'un nouveau message de notification d'information de présence (402, 402*) qui est transmis au client distant en réponse à un changement d'information de présence du document de présence stocké localement ;
dans lequel le nouveau message de notification d'information de présence comprend une identification (504) du document de présence comprenant un nom de stockage d'objets qui permet au client distant de requérir (628) le document de présence à un stockage d'objets d'un dispositif (202(1), 202(0), 702, 750) sur lequel le logiciel client de messagerie instantanée est en cours d'exécution ;
dans lequel le client distant comprend un logiciel client de messagerie instantanée distant ;
dans lequel le logiciel client de messagerie instantanée est en outre capable de stocker une liste inverse dynamique DRL qui comprend le logiciel client de messagerie instantanée distant ; et
dans lequel le système comprend en outre un moyen d'utilisation du logiciel client de messagerie instantanée pour transmettre le nouveau message de notification d'information de présence à travers un ou plusieurs réseaux (206, 752, 754) au logiciel client de messagerie instantanée distant sans routage via un serveur de messagerie instantanée central (204).

7. Système informatique selon la revendication 6, adapté en outre pour utiliser le logiciel client de messagerie instantanée inclus sur les supports accessibles par un processeur selon la revendication 2 ou 3.
